# EUROPÄISCHE PATENTSCHRIFT

(11) **EP 0 940 319 B1**
(45) Veröffentlichungstag und Bekanntmachung des Hinweises auf die Patenterteilung: **09.04.2003**
(21) Anmeldenummer: 99101612.2
(22) Anmeldetag: 03.02.1999
(51) Int. Cl.: B62D 21/02, B60G 9/00, B60G 11/27, B60B 35/02

(54) **Fahrgestell eines schweren Nutzfahrzeuges**
Chassis of a heavy utility vehicle
Chassis d'un véhicule utilitaire lourd

(30) Priorität: 04.03.1998 DE 19809279
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl.-Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- EP-A- 0 009 975
- EP-A- 0 678 405
- DE-A- 3 835 684
- DE-A- 4 329 862
- DE-A- 19 624 242
- FR-A- 2 662 118
- US-A- 4 168 086
- US-A- 5 445 404
- US-A- 5 641 181

## Beschreibung

Die Erfindung betrifft ein Fahrgestell eines schweren Nutzfahrzeugs mit Merkmalen gemäß dem Oberbegriff des Anspruchs 1.

Die gattungsgemäße DE 21 42 079 A1 beschreibt eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andernendes an der gefederten Masse des Fahrzeugs angelenkt ist.

Zu erwähnen sind auch noch die DE 26 15 218 C2 und die DE 32 43 997 A1.

Demgegenüber ist es Aufgabe der Erfindung, innerhalb eines Fahrgestells eines schweren Nutzfahrzeugs die Aufhängung einer Starrachse einschließlich Federung und Dämpfung auf möglichst platzsparende Weise und so darzustellen, daß sich ein in Verbindung mit Starrachsen bisher nicht erreichter Fahr- und Federungskomfort erzielen läßt.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Feder-Dämpfer-Beine sind bisher nur in hochwertigen Personenkraftwagen-Fahrgestellen zur Anwendung gekommen. Insofern stellt das Vorsehen von Feder-Dämpfer-Beinen in einem schweren Nutzfahrzeug das Betreten von Neuland dar. Das Anschließen der Feder-Dämpfer-Beine jeweils oben an einem am Fahrzeugrahmen befestigten Federbeinhalter und unten an einer Anlenkstelle am Starrachskörper soweit wie möglich außen im Sinne einer größtmöglichen Federspur mit von vorne gesehen gepfeilter Anordnung der Federbeine ergibt den gewünscht hohen Fahrkomfort. Besonders vorteilhaft kommt dies zum Tragen, wenn die Starrachse nach Art einer selbststabilisierenden Verbundlenkerachse ausgebildet ist, mit Merkmalen, wie im Anspruch 3 angegeben.

Nachstehend ist die Erfindung anhand der Zeichnung und darin aufgezeigter Beispiele in Verbindung mit einer ebenso neuartigen, nach Art einer selbststabilisierenden Verbundlenkerachse konstruierten Starrachse näher erläutert. In der Zeichnung zeigen:

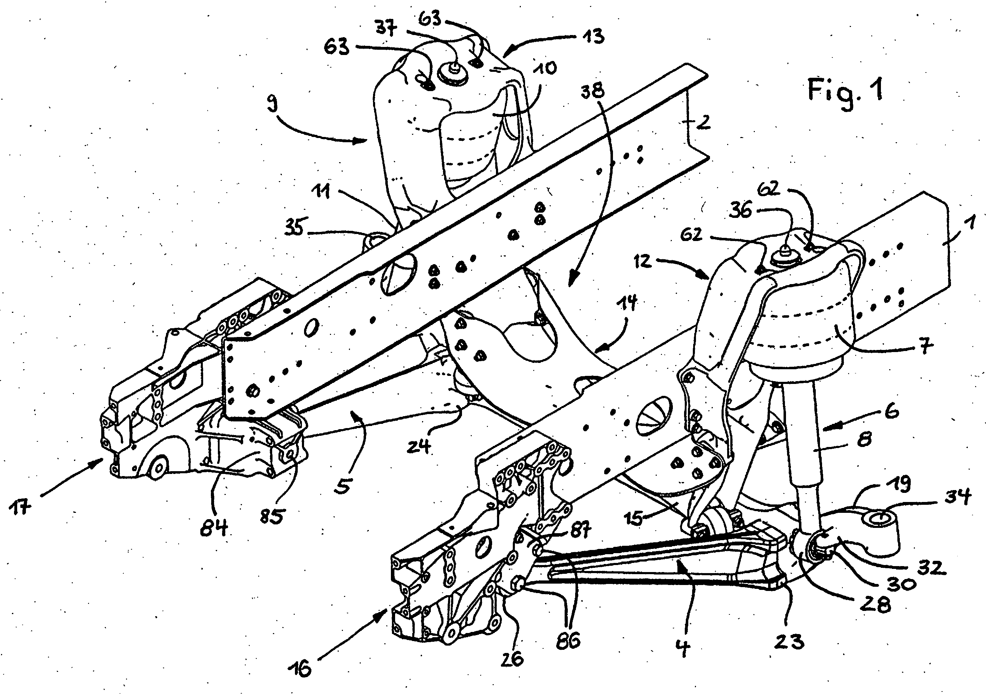

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

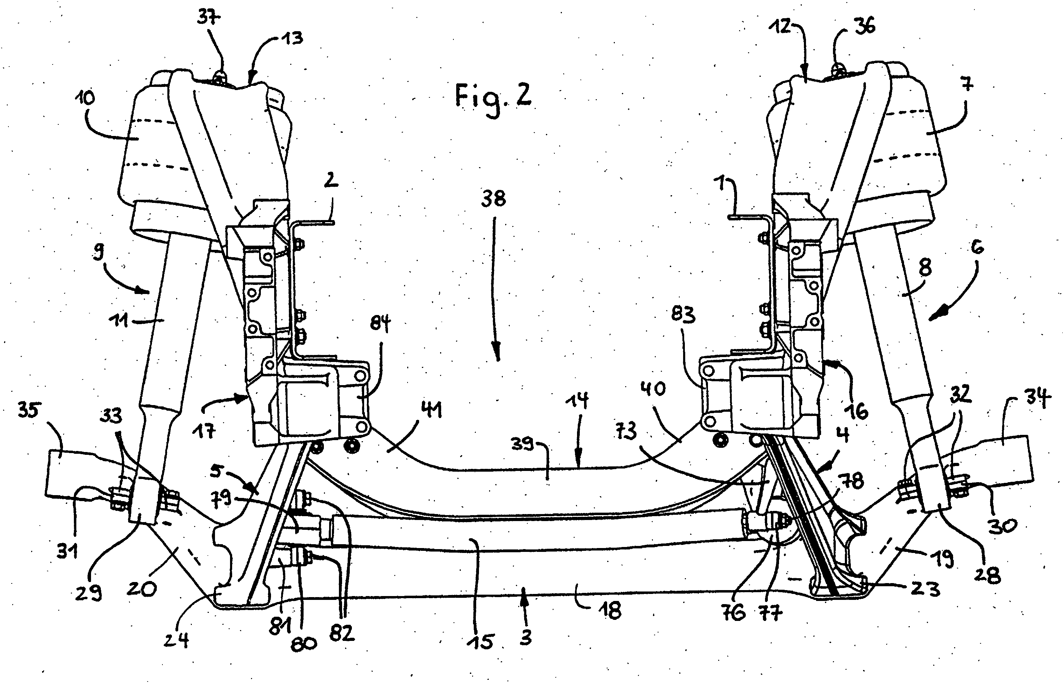

- Fig. 2: den Fahrgestellbereich gemäß Fig. 1 in Ansicht von vom,

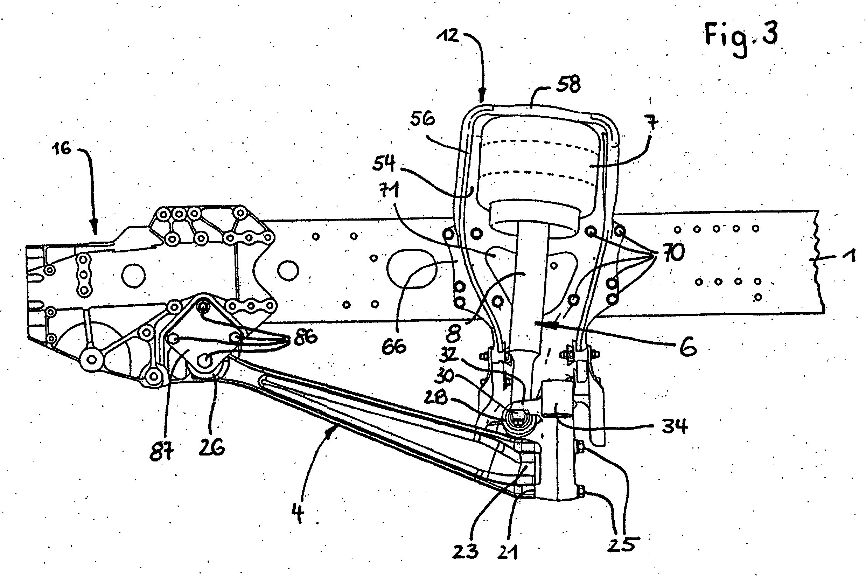

- Fig. 3: den Fahrgestellbereich gemäß Fig. 1 in Seitenansicht,

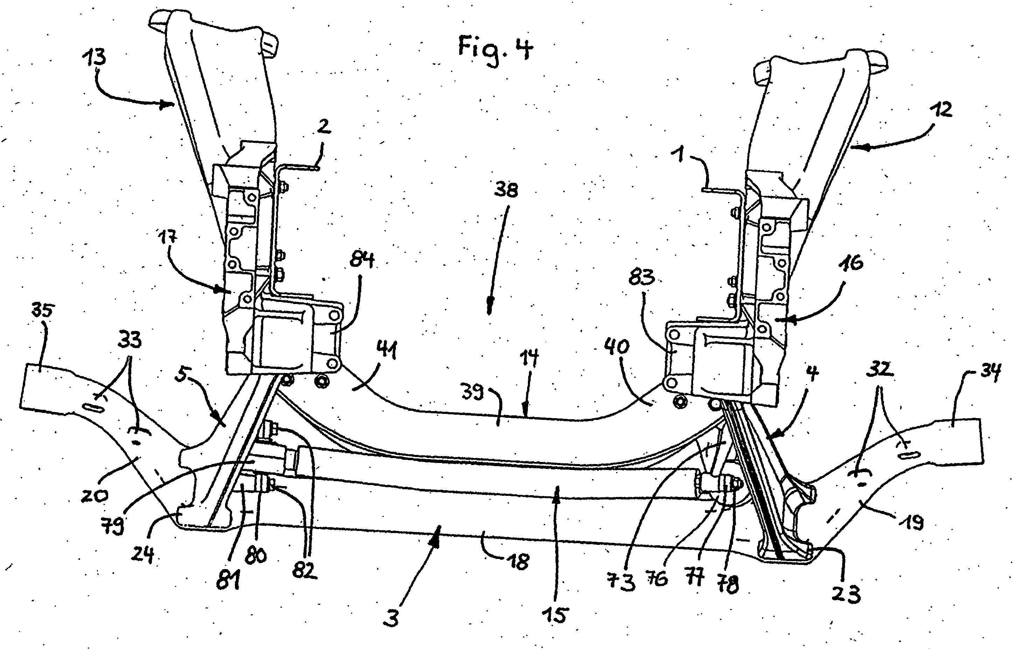

- Fig. 4: die Darstellung gemäß Fig. 2 ohne Federbeine,

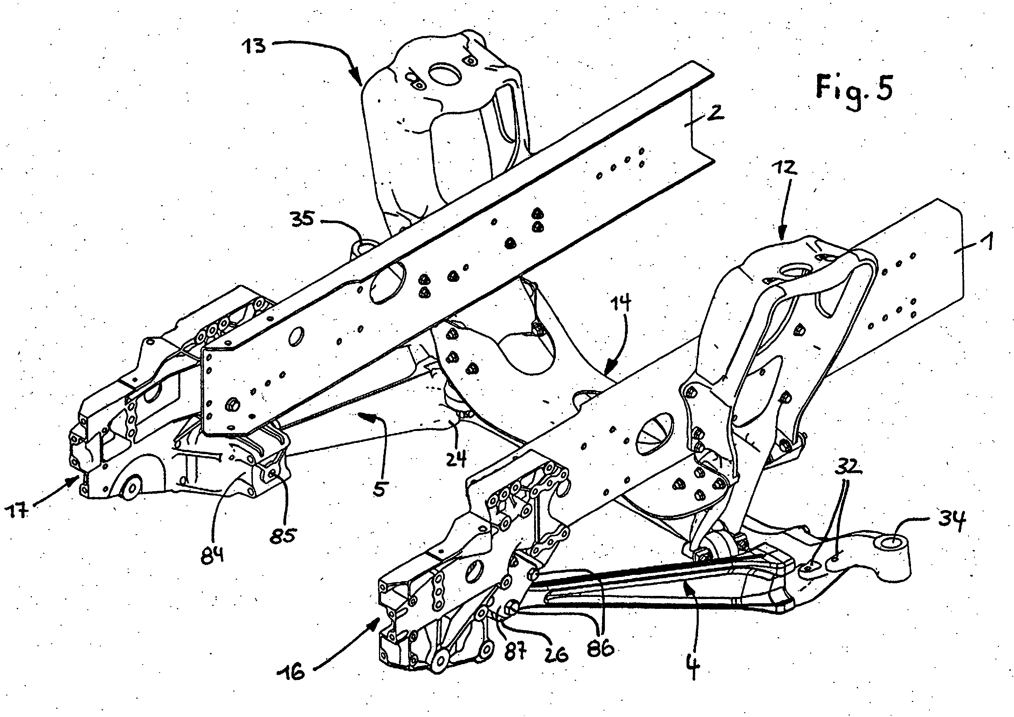

- Fig. 5: die Darstellung gemäß Fig. 1 ohne Federbeine,

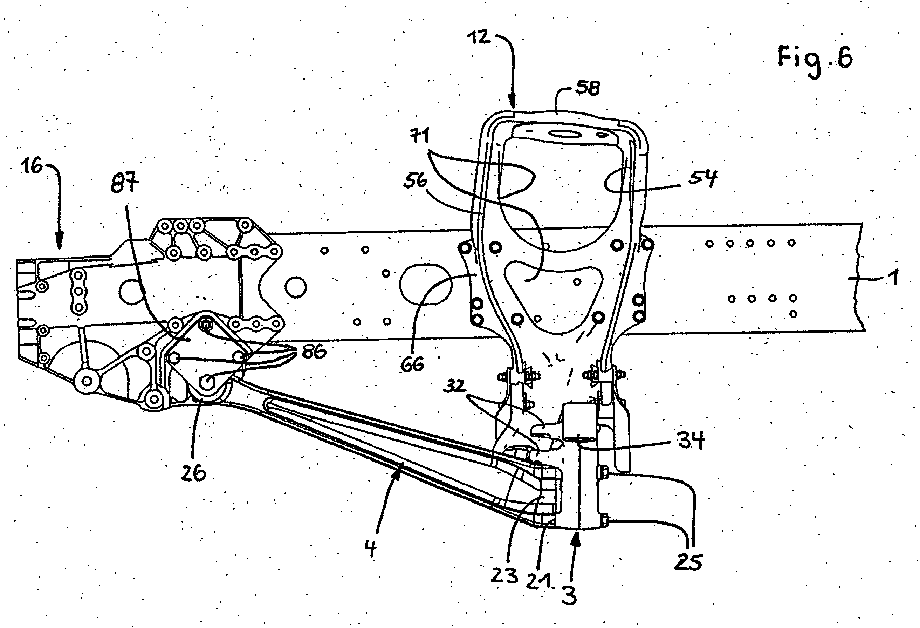

- Fig. 6: die Darstellung gemäß Fig. 3 ohne Federbeine,

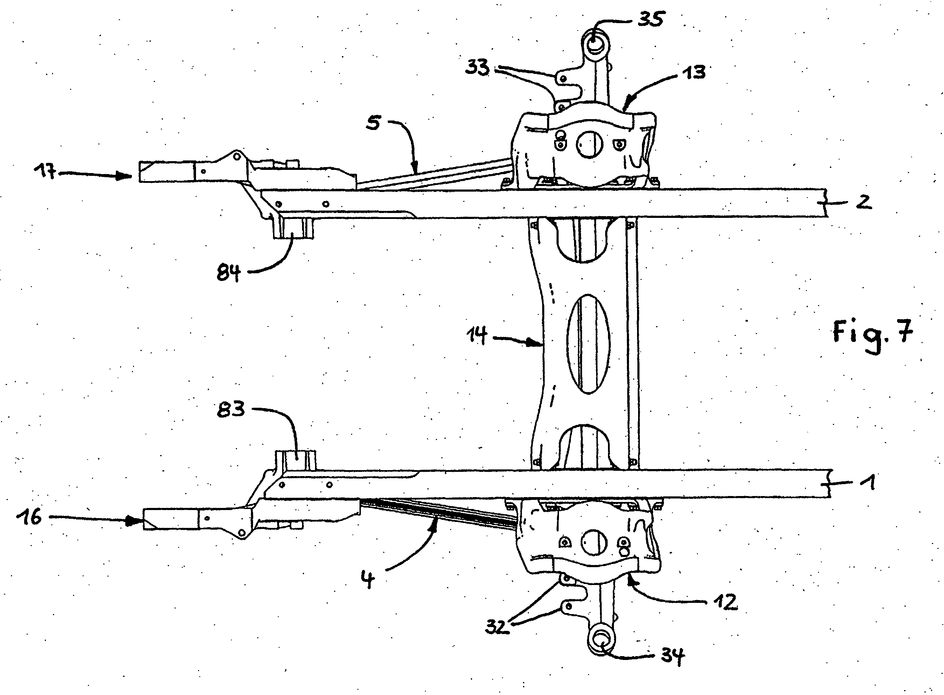

- Fig. 7: die Darstellung gemäß Fig. 4 in Draufsicht ohne Panhardstab,

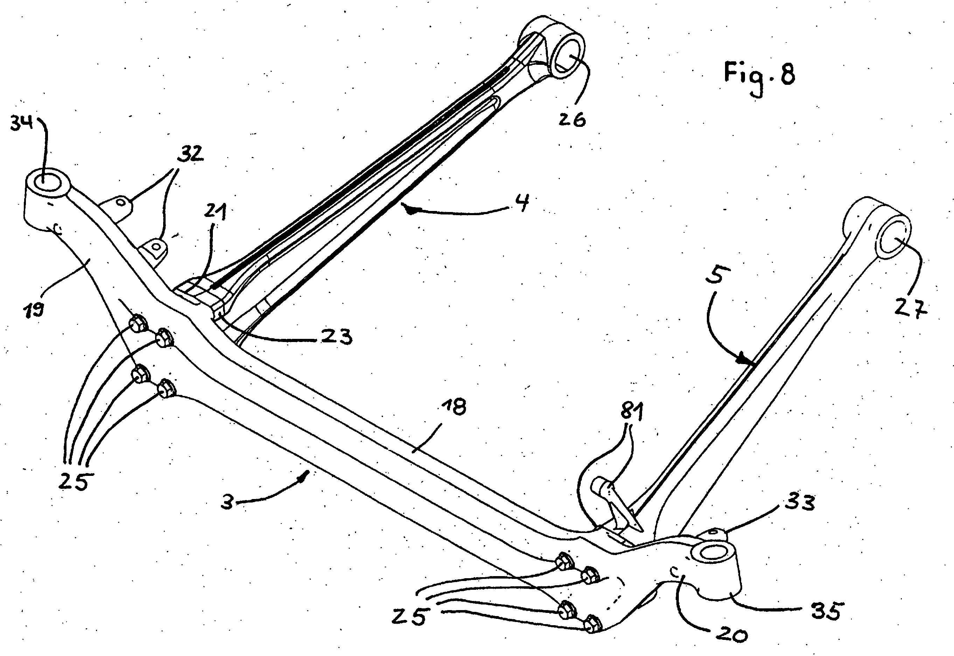

- Fig. 8: den Starrachskörper-Längslenker-Verbund aus den Fig. 1 bis 7 in perspektivischer Alleindarstellung,

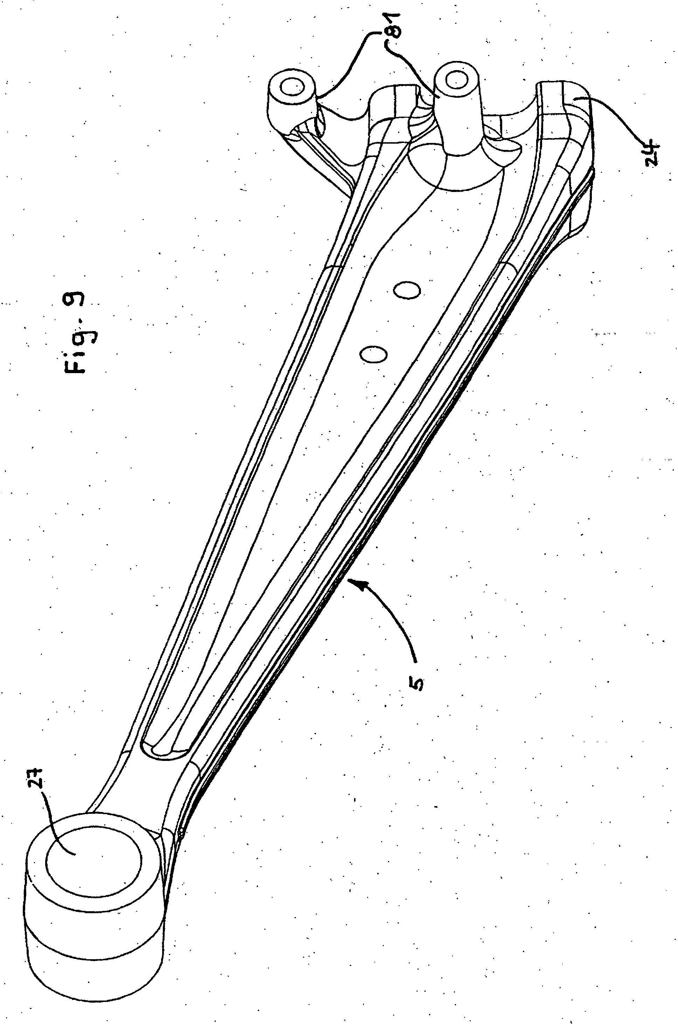

- Fig. 9: einen Längslenker aus dem Starrachskörper-Längslenker-Verbund gemäß Fig. 8 in perspektivischer Alleindarstellung,

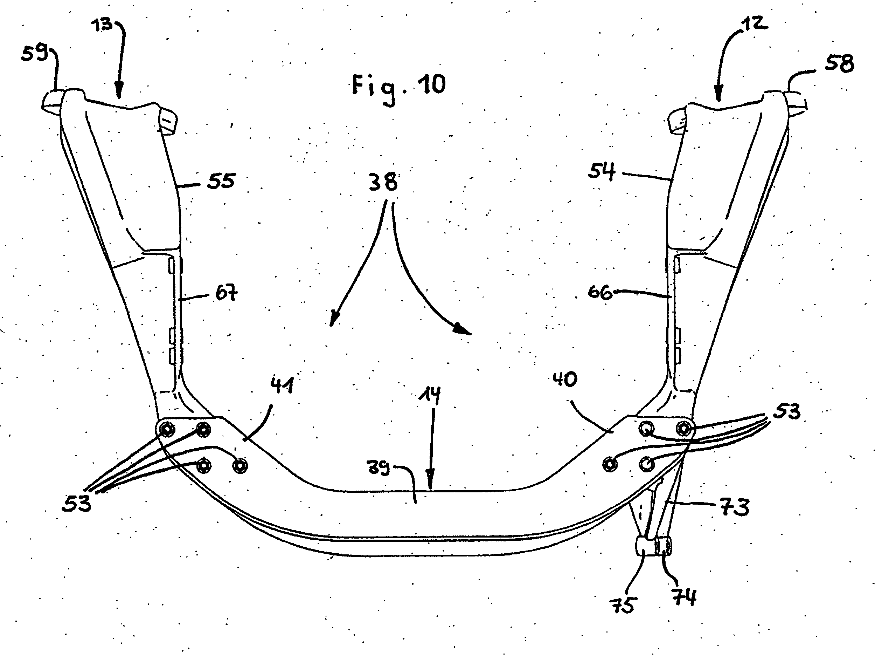

- Fig. 10: denFederbeinhalter-Quertraverse-Verbund aus Fig. 1 bis 7 in vorderansichtiger Alleindarstellung,

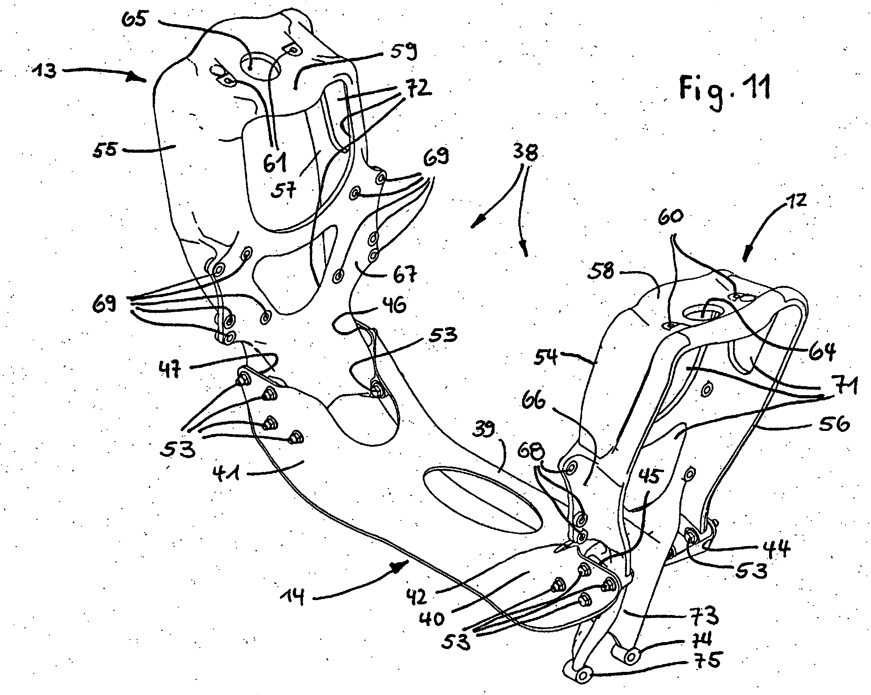

- Fig. 11: den Federbeinhalter-Querträverse-Verbund aus Fig. 1 bis 7 in perspektivischer Alleindarstellung,

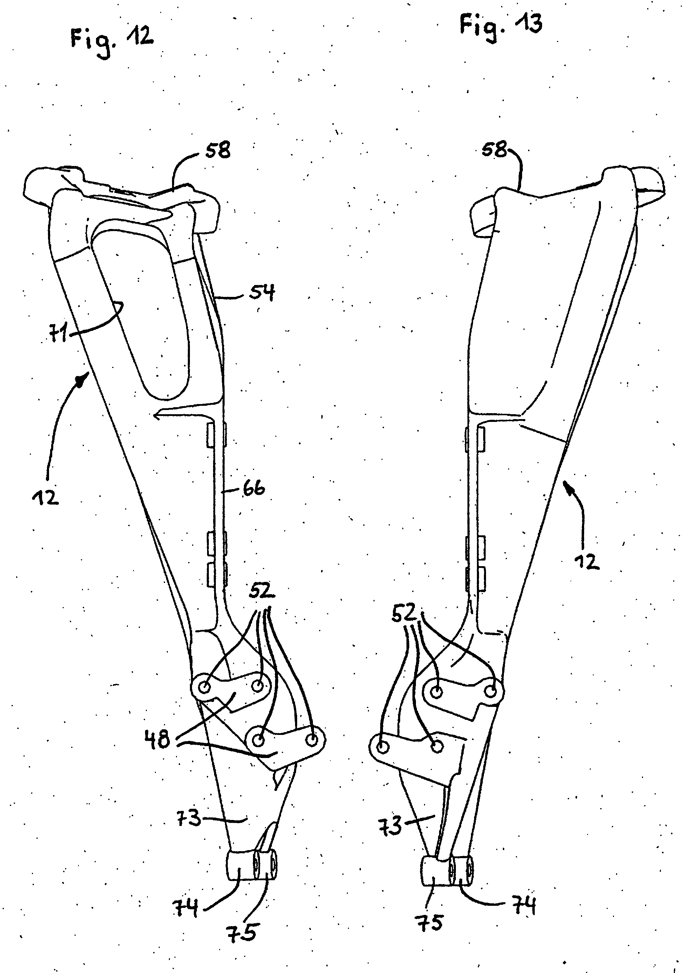

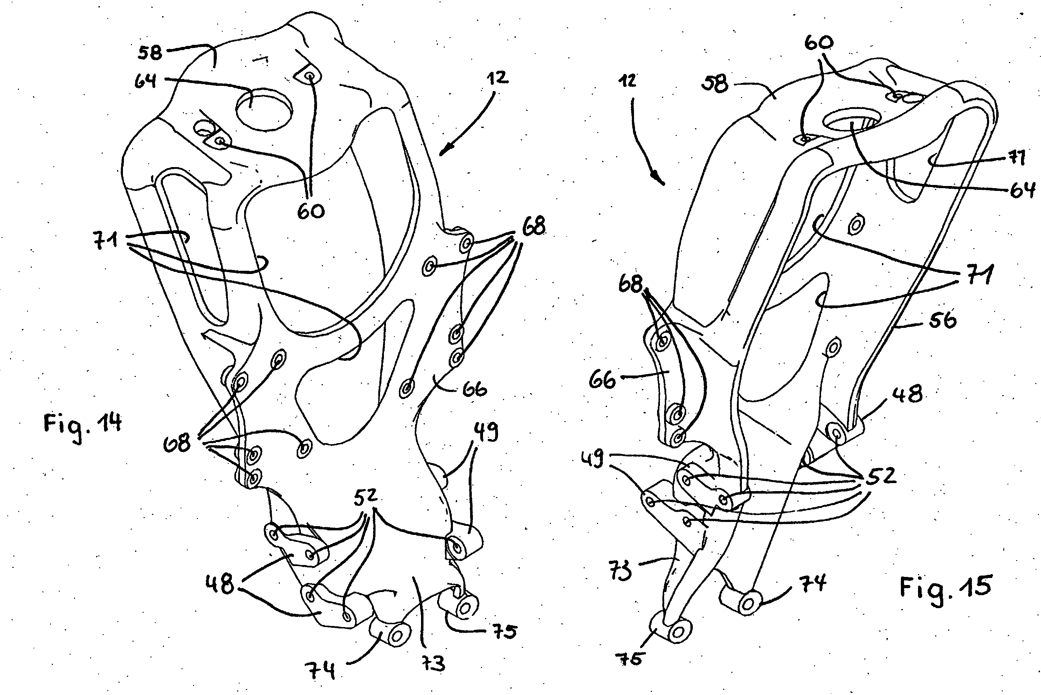

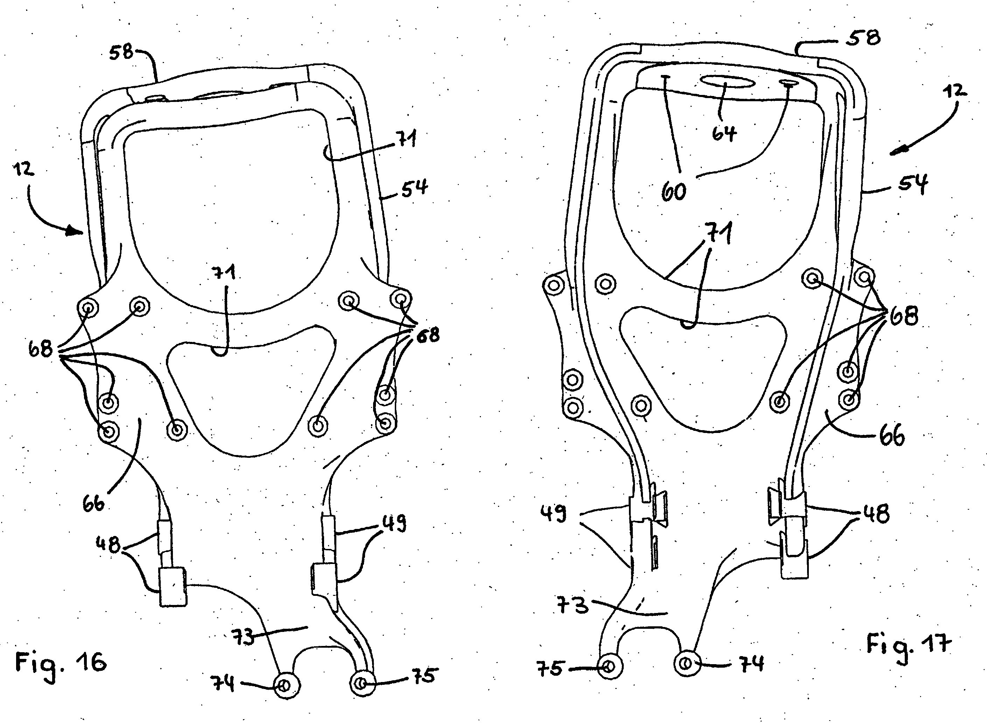

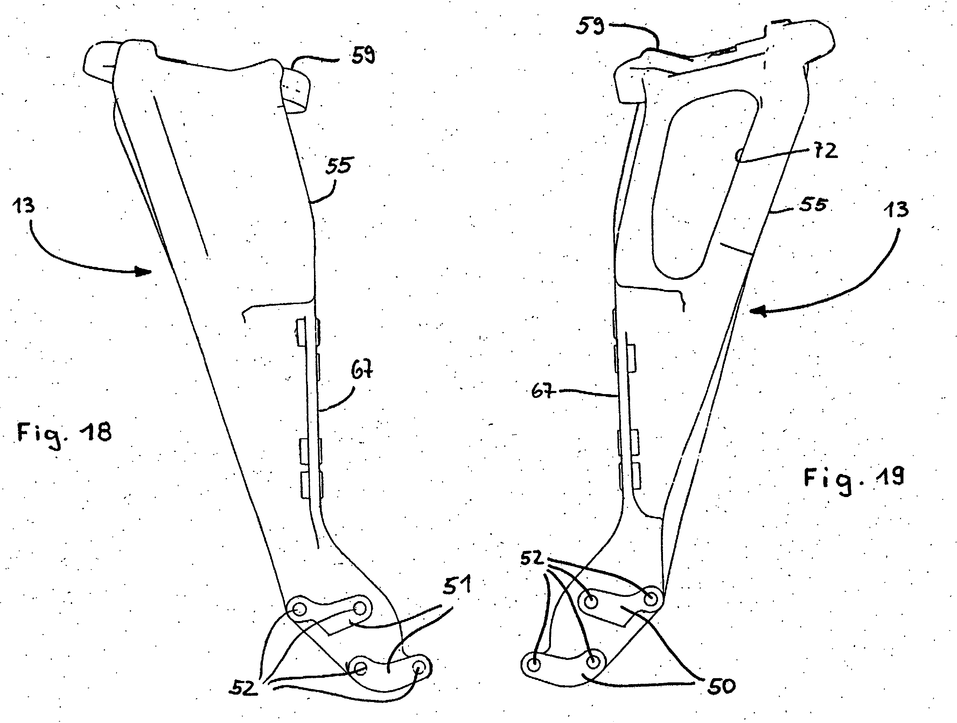

- Fig. 12 bis 17: je eine unterschiedliche Ansicht des einen der beiden Federbeinhalter, und

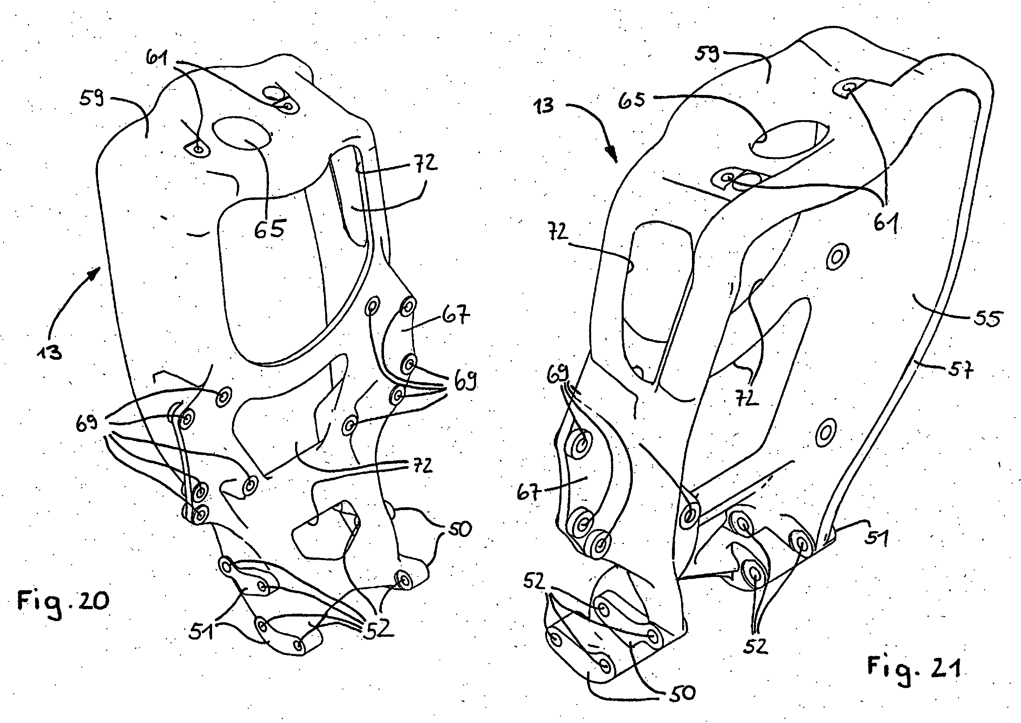

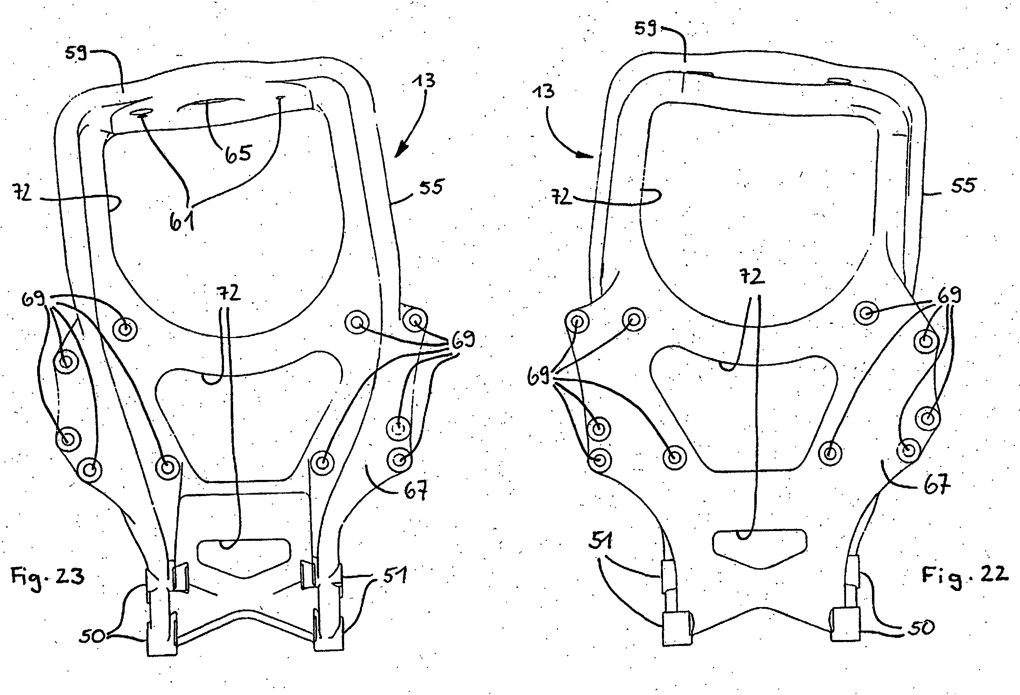

- Fig. 18 bis 23: je eine unterschiedliche Ansicht des anderen der beiden Federbeinhalter.

Das erfindungsgemäße Fahrgestell ist Bestandteil eines schweren Nutzfahrzeuges, bei dem es sich um einen Lastkraftwagen, insbesondere der Frontlenker-Bauart mit kippbarem Fahrerhaus, mit An- und Aufbauten der verschiedensten Art, auch solche für Spezialeinsatzzwecke, eine Sattelzugmaschine oder um einen Omnibus handeln kann. Die erfindungsgemäße Starrachse kann eine Vorderachse, Nachlaufachse oder Vorlaufachse mit lenkbaren oder nicht-lenkbaren Rädern sein. In der Zeichnung ist als Beispiel für die erfindungsgemäße Starrachse eine Vorderachse aufgezeigt. Vom Fahrgestell sind in der Zeichnung als Teile des Rahmens dessen beide Längsträger mit 1 und 2 bezeichnet.

Die dargestellte Starrachse besteht einschließlich aller Aufhängungs-, Federungsund Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem Panhardstab 15 und einem - von vorne gesehen - U-förmigen Querträger 38, der sich aus einem linken Federbeinhalter 12, einem rechten Federbeinhalter 13 und einer Quertraverse 14 zusammensetzt.

In der Zeichnung sind ein linker Multifunktionslagerschild mit 16 und ein rechter Multifunktionslagerschild mit 17 bezeichnet. Jeder derselben ist außen an einem Rahmen-Längsträger 1 bzw. 2-befestigt und dient zur rahmenseitigen Anlenkung der erfindungsgemäßen Starrachse und im vorliegenden Beispiel darüber hinaus auch als Halte-, Stütz- und Lagerorgan für eine größere Anzahl anzubauender Fahrzeugteile.

Die erfindungsgemäße Starrachse bringt ihre Vorteile dann besonders zur Geltung, wenn sie - wie dargestellt - nach Art einer selbststabilisierenden Verbundlenkerachse ausgebildet ist. In diesem Fall ist die Starrachse grundsätzlich derart konstruiert, daß zu ihrer Querführung nur der Panhardstab 15 notwendig ist und sie ohne den bisher bei schweren Nutzfahrzeugen zur Beschränkung des Wankens notwendigen U-förmigen Stabilisator auskommt, aber dessen Funktion einem Bauteliverbund aufgeprägt ist, der sich aus dem Starrachskörper 3 und den beiden an diesem befestigten Längslenkern 4, 5 zusammengesetzt. Dieser Zweckbestimmung und Funktion gehorchend ist der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften Endabschnitt 19 bzw. 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starrachskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Wie der Starrachskörper 3 sind auch die beiden Längslenker 4, 5 in die Stabilisatorfunktion eingebunden und dementsprechend ausgebildet. Die beiden jeweils als Gußteil, gegebenenfalls auch Schmiedeteil hergestellten und anschließend an bestimmten Stellen spanabhebend nach- bzw. endbearbeiteten Längslenker 4, 5 sind demzufolge in der Vertikalen vergleichsweise biegesteif, um ihre Längsachse aber begrenzt tordierbar ausgebildet. Generell sind die beiden Längslenker 4, 5 in diesem Fall hinsichtlich ihrer Biegesteifigkeit und Torsionsfähigkeit auf den Gesamtstabilisierungseffekt in Verbindung mit dem torsionsfähigen Starrachskörper 3 abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge größenmäßig ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5 - von der Seite her betrachtet - vom Starrachskörper 3 ausgehend schräg nach oben gerichtet zu den rahmenseitigen Multifunktionslageschilden 16 bzw. 17 hin.

Die erfindungsgemäße Starrachse garantiert deswegen einen bisher noch nie in einem Nutzfahrzeug dargestellten Fahr- und Federungskomfort, weil an ihr die größt-, mögliche Federspur festgelegt ist. Das heißt, jedes der beiden Federbeine 6 bzw. 9 ist an seinem unteren Ende z. B. über ein in ein dortiges Lagerauge 28 bzw. 29 eingebautes Pratzengelenk 30 bzw. 31 an einer achskörperfesten Lagerstelle angelenkt, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist. Zu diesem hohen Fahr- und Federungskomfort trägt auch bei, daß die beiden Federbeine 6 bzw. 9 - von vorne gesehen - gepfeilt zueinander eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder je nach dem, ob es sich um eine geschobene oder - wie dargestellt - gezogene Starrachse handelt, leicht nach vorn oder hinten geneigt.

Mit seinem oberen Ende 36 bzw. 37 ist jedes. Federbein 6 bzw. 9 räumlich oberhalb und seitlich außerhalb des benachbarten Rahmenlängsträgers 1 bzw. 2 an einem der beiden Federbeinhalter 12 bzw. 13 abgestützt und befestigt Die beiden Federbeinhalter 12 bzw. 13 bilden zusammen mit der Quertraverse 14 einen - von vorne gesehen - U-förmigen Querträger 38, der mit seiner Quertraverse 14 den Starrachskörper 3 und den Panhardstab 15 oben mit geringem Abstand überbrückt und außerdem die beiden Rahmen-Längsträger 1, 2 stabilisierend miteinander verbindet.

innerhalb des Querträgers 38 ist die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vorn und hinten zugehörige Anlageflächen 48, 49 bzw. 50, 51 zugeordnet sind. im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchern 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 z. B. über ein in sein einenendiges Lagerauge 76 eingebautes Pratzengelenk 77 abgestützt und mittels Schrauben 78 befestigt ist.

Mit seinem anderen, gegenüberliegenden Ende ist der Panhardstab 15 z. B. über ein in das dortige Lagerauge 79 eingebautes Pratzengelenk 80 an geeigneter Stelle des Starrachskörper-Längslenker-Verbundes angelenkt. Für den Fall der Anlenkung am Starrachskörper 3 ist an diesem ein Anschlußbock befestigt oder mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt. Demzufolge ist an diesem ein seitlich nach innen vorspringender maulartiger Lagerbock 81 befestigt oder - wie dargestellt - mitangeformt, der eine äußere stirnseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund seiner wie vorstehend beschriebenen Anlenkung annähernd parallel oder leicht schräg zum Mittelbereich 18 des Starrachskörpers 3 verlaufend.

Die beiden Multifunktionslagerschilde 16, 17 weisen jeweils einen zur Fahrzeugmitte hin abragenden Vorsprung 83 bzw. 84 auf, in dessen von außen freiem Innenraum eine Anlenkstelle für die Starrachse gegeben ist, und zwar in Form einer Anlagefläche und einer Querbohrung 85, in die bei Montage ein das vordere Längslenker-Lageräuge 26 bzw. 27 durchdringender Lagerbolzen eingebaut und anschließend jede dieser beiden Lagerstellen von außen her durch einen mittels mehrerer Schrauben 86 am Multifunktionslagerschild 16 bzw. 17 befestigten Deckel 87 gesichert wird.

## Patentansprüche

1. Fahrgestell eines schweren Nutzfahrzeuges, mit einem Rahmen, dessen beide Längsträger (1,2) über mehrere Querträger miteinander verbunden sind, und mit mehreren Achsen, von denen wenigstens eine eine Starrachse ist, die sich einschließlich ihrer Federung und Aufhängung durch folgende Merkmale kennzeichnet:
a) je Achsseite ist ein aus einer Luft- oder Schraubenfeder (7, 10) und einem hierzu koaxialen Stoßdämpfer (8, 11) bestehendes Federbein (6, 9) vorgesehen,
b) je Achsseite ist ein am Fahrzeugrahmen (1, 2) befestigter Federbeinhalter (12, 13) vorgesehen, an dem ein Federbein (6, 9) mit seinem oberen Ende (36, 37) fixiert ist,
c) je Achsseite ist eine Anlenkstelle (32, 33) für das untere Ende (28, 29) eines Federbeines (6, 9) an einem Starrachskörper (3) so weit wie möglich zu einem außenendigen Radträger-Anschlußkopf (34, 35) hingerückt angeordnet, daß sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29).

2. Fahrgestell nach Anspruch 1, **dadurch gekennzeichnet, daß** jedes der beiden Federbeine (6, 9) - von der Seite her gesehen - entweder vertikal oder leicht nach vorn oder hinten geneigt angeordnet ist.

3. Fahrgestell nach Anspruch 1, **dadurch gekennzeichnet, daß** die Starrachse nach Art einer selbststabilisierenden Verbundlenkerachse ausgebildet ist, demzufolge die Funktion eines das Wanken des Nutzfahrzeuges begrenzenden Stabilisators einem Bauteilverbund aufgeprägt ist, der aus dem Starrachskörper (3) und zwei fest an diesem angeschlossenen Längslenkern (4, 5) besteht, wobei
- die beiden Längslenker (4, 5) weit voneinander beabstandet jeweils stimseitig vorn oder hinten am Starrachskörper mittels Schrauben (25) kraft- und gegebenenfalls auch formschlüssig angeflanscht sind,
- der Starrachskörper (3) in einem geraden Mittelbereich (18) zwischen den angeschlossenen Längslenkern (4, 5) definiert torsionsfähig ausgebildet ist,
- die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) abgestimmt sind durch entsprechende Bemessung und Formgebung der hierfür maßgeblichen Querschnitte,
- diese Verbundlenkerachse mit den freien Enden ihrer beiden Längslenker (4, 5) an rahmenfesten Lagerstellen (16, 17) angelenkt ist, und
- zur Querführung dieser Verbundlenkerachse ein Panhardstab (15) vorgesehen ist, der einenendes am Starrachskörper-Längslenker-Verbund und andernendes mittelbar am Rahmen angelenkt ist.

4. Fahrgestell nach einem der vorhergehenden Ansprüche, **dadurch gekennzeichnet, daß** jedes der beiden Federbeine (6, 9) an seinem unteren Ende mit einem Lagerauge (28, 29) über ein eingebautes Pratzengelenk (30, 31) an einer achskörperfesten Lagerstelle angelenkt ist, die durch am Starrachskörper (3) mitangeformte und entsprechend spanabhebend hachbearbeitete Vorsprünge (32, 33) gebildet und räumlich im Bereich zwischen einem Längslenker (4, 5) und einem achskörperendigen Radträger-Anschlußkopf (34, 35) soweit wie möglich zu letzterem hingerückt angeordnet ist.

5. Fahrgestell nach einem der vorhergehenden Ansprüche, **dadurch gekennzeichnet, daß** jeder Federbeinhalter (12, 13) zumindest in, seinem oberen Bereich nach Art einer nach außen offenen Halbschale (54, 55) ausgebildet ist, von deren Begrenzungswand (56, 57) das zugehörige Federbein (6, 9) im. Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

6. Fahrgestell nach Anspruch 5, **dadurch gekennzeichnet, daß** jeder Federbeinhalter (12, 13) etwa in seinem mittleren Höhenbereich einen außenseitig an der Halbschale (54, 55) anschließenden Anschlußflansch (66, 67) mit mehreren Schraubenlöchern (68, 69) aufweist, daß dieser Anschlußflansch (66, 67) etwa im Schubmittelpunkt gegeben ist, und daß jeder Federbeinhalter (12, 13) mit seinem Anschlußflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

7. Fahrgestell nach einem der vorgegebenen Ansprüche, **dadurch gekennzeichnet, daß** die beiden Federbeinhalter (12, 13) jeweils durch ein Stahlgußteil realisiert sind, das nach dem Abguß an erforderlichen Stellen spanabhebend nach- bzw. endbearbeitet wird und an geeigneten Stellen Durchbrüche (71, 72) zur Gewichtsreduzierung aufweist.

8. Fahrgestell nach einem der vorgegebenen Ansprüche, **dadurch gekennzeichnet, daß** die beiden Federbeinhalter (12, 13) zusammen mit einer Quertraverse (14) einen - von vorne gesehen - U-förmigen Querträger (38) bilden, der den Starrachskörper (3) und einen Panhardstab (15) oben mit geringerem Abstand überbrückt und außerdem die beiden Rahmen-Längsträger (1, 2) stabilisierend miteinander verbindet.

9. Fahrgestell nach Anspruch 8, **dadurch gekennzeichnet, daß** die als Teil des Querträgers (38) fungierende Quertraverse (14) durch ein im Querschnitt hutförmiges Blechpreßteil, gegebenenfalls auch Schmiede- oder Gußteil gebildet ist, das einen geraden Mittelabschnitt (39) und beiderseits derselben je einen schräg hochgezogenen Endabschnitt (40, 41) sowie gegebenenfalls in der Mitte seines Obergurtes einen oder mehrere zur Gewichtsreduzierung dienende Durchbrüche aufweist.

10. Fahrgestell nach einem der Ansprüche 8 und 9, **dadurch gekennzeichnet, daß** die äußeren Enden der Quertraverse (14) nach Art eines Maules ausgebildet sind, mit dem der anzuschließende Federbeinhalter (12, 13) außen übergriffen wird.

11. Fahrgestell nach Anspruch 10, **dadurch gekennzeichnet, daß** jedes Maul an der Quertraverse (14) durch einen Ausschnitt (42, 43) in dessen Obergurt und beiderseits jedes Ausschnitts (42, 43) verbleibende Wangen (44, 45; 46, 47) gebildet ist, denen am jeweiligen Federbeinhalter (12,13) vorn und hinten zugehörige Anlageflächen (48, 49; 50, 51) zugeordnet sind, in deren Bereich die Quertraverse (14) mit ihren Wangen (44, 45; 46, 47) abgestützt und dort durch entsprechende Bohrungen bzw. Löcher (52) durchdringende Schrauben (53) mit den Federbeinhaltern (12, 13) fest verbunden ist

12. Fahrgestell nach einem der vorhergehenden Ansprüche 8 bis 11, **dadurch gekennzeichnet, daß** einem der beiden Federbeinhalter (12, 13) über seine eigentliche Funktion hinaus auch noch jene Funktion aufgeprägt ist, nämlich das Abstütz-, Halte-, und Anlenkorgan für das eine Ende des Panhardstabes (15) zu bilden.

13. Fahrgestell nach Anspruch 12, **dadurch gekennzeichnet, daß** einer der beiden Federbeinhalter (12, 13) nach unten durch ein Lagerschild (73) verlängert ist, an dessen unterem Ende ein Maul und beiderseits derselben je ein Lagerauge (74, 75) ausgebildet sind, an denen der Panhardstab (15) über ein in seinem einenendigen Lagerauge (76) eingebautes Pratzengelenk (77) und zugehörige Schrauben (78) befestigt ist.

14. Fahrgestell nach einem der Ansprüche 12 und 13, **dadurch gekennzeichnet, daß** der Panhardstab(15) mit seinem anderen, gegenüberliegendem Ende über ein in das dortige Lagerauge (79) eingebautes Pratzengelenk (80) an geeigneter Stelle des Starrachskörper-Längslenker-Verbundes angelenkt ist.

15. Fahrgestell nach Anspruch 14, **dadurch gekennzeichnet, daß** der Panhardstab (15) über das Pratzengelenk (80) an einem Lagerbock (81) angeschlossen wird, der entweder am Achskörper (3) oder einem der beiden Längslenker (4, 5) entweder mitangeformt oder dort angebaut ist und an dem eine entsprechende Anlagefläche und Gewindebohrungen für die Anschraubung des Pratzengelenkes (80) mittels Schrauben (82) vorgesehen sind.

## Claims

1. Chassis of a heavy-duty commercial vehicle with a frame whose two longitudinal members (1, 2) are connected with each other by means of several cross-members, and with several axles, of which at least one is a rigid axle **characterized**, also in respect of its suspension and spring mounting, by the following features:
a) a spring strut (6, 9) provided on each axle side and consisting of an air or coil spring (7, 10) and of a shock absorber (8,11) arranged coaxially to said spring (7,10)
b) a spring strut holder (12, 13) provided on each axle side and fastened to the vehicle frame (1, 2), to which the upper end (36, 37) of a spring strut (6, 9) is fixed
c) an articulated point (32, 33) being provided for the lower end (28, 29) of a spring strut (6, 9), said articulated points being arranged on each axle side of a rigid axle body (3), and positioned as closely as possible to a wheel-bearing connecting head (34, 35) located on the outer end of said axle body (3), so as to permit a maximum possible spring track and - when viewed from the front - so as to produce a convergent arrangement of the two spring struts (6, 9), in which the upper ends (36, 37) of the latter have a smaller distance between them than their lower ends (28, 29).

2. Chassis according to Claim 1, **characterized in that** each of the two spring struts (6, 9) - when seen from the side - is arranged so as to be inclined either vertically or slightly inclined towards the front or rear.

3. Chassis according to Claim 1, **characterized in that** the rigid axle is designed as a self-stabilizing twist-beam axle, by virtue of which the function of a stabilizer limiting the rolling motion of the commercial vehicle is invested in an assembly consisting of the rigid axle body (3) and of two longitudinal arms (4, 5) firmly attached to the latter
- the two longitudinal arms (4, 5) being spaced a wide distance apart, the front face of each of them being flanged onto the front or rear side of the rigid axle body in a non-positive or, if necessary, in a positive connection by means of bolts (25)
- the rigid axle body (3) being designed to have a defined torsional capability in a straight central area (18) between the attached longitudinal arms (4, 5)
- the two longitudinal arms (4, 5), if viewed vertically, being designed to have comparatively great flexural strength but limited torsional capability about their longitudinal axis and, in respect of their flexural strength and torsional capability, being adapted to the overall stabilizing effect in conjunction with the torsion-capable rigid axle body (3) through the suitable dimensioning and shaping of the cross-sections crucial to this
- said twist-beam axle being coupled to frame-mounted bearing supports (16,17) at the free ends of its two longitudinal arms (4, 5), and
- a Panhard rod (15) being provided for the transversal guidance of said twist-beam axle, one end of the Panhard rod being coupled with the assembly consisting of the rigid axle body and the longitudinal arms and the other end being coupled directly with the frame.

4. Chassis according to one of the foregoing Claims, **characterized in that** the lower ends of each of the two spring struts (6, 9) are provided with a bearing eye (28, 29) through which they are coupled to an axle-body-mounted bearing point by means of an incorporated claw-type joint (30, 31), which axle-body-mounted bearing point is formed by projections (32, 33) on the rigid axle body (3), which projections are shaped as an integral part of said axle body (3), are subsequently machined, are positioned in the area between a longitudinal arm (4, 5) and a wheel-bearing connecting head (34, 35), are located on the outer end of the axle body and are arranged as closely to said wheel-bearing connecting head (34, 35) as possible.

5. Chassis according to one of the foregoing Claims, **characterized in that** each of the spring strut holders (12, 13) is, at least in its upper area, designed as a half shell (54, 55) open towards the outside, the associated spring strut (6, 9), in the area of its air or coil spring (7, 10), being partially covered radially on the outside, and with but small clearance from the inside, by the limiting wall (56, 57) of said half shell, by whose covering plate (58, 59) the upper end of each spring strut (6, 9) is supported and to which it is fastened by means of bolted connections (62, 63), each passing through two holes (60, 61), a central hole (64, 65) in the spring strut covering plate (58, 59) being provided for centring each spring strut (12, 13) and for the free passage of its upper end (36, 37).

6. Chassis according to Claim 5, **characterized in that** each of the spring strut holders (12, 13) has, approximately halfway up, a connecting flange (66, 67) with several bolt holes (68, 69) that is flanged onto the outside of the half shell (54, 55), that said connecting flange (66, 67) is located roughly in the thrust centre, and that each of the spring strut holders (12, 13) is flanged onto the respective longitudinal frame member (1, 2) by means of its connecting flange (66, 67), with the aid of bolts (70) and associated nuts, said bolts passing through the bolt holes (68, 69) and through the holes aligned to these on the inside of the longitudinal member.

7. Chassis according to one of the foregoing Claims, **characterized in that** each of the spring strut holders (12,13) is designed in the form of a cast steel part which, after being cast, is machined and finished at the points necessary and has openings (71, 72) at suitable points for reduction of weight.

8. Chassis according to one of the foregoing Claims, **characterized in that** the two spring strut holders (12, 13) in conjunction with a transverse beam (14), when viewed from the front, form a U-shaped cross-member (38) which spans the top region of the rigid axle body (3) and a Panhard rod (15) with only a small clearance and, furthermore, joins the two longitudinal frame members (1, 2) with each other, thus stabilizing them.

9. Chassis according to Claim 8, **characterized in that** the transverse beam (14) functioning as part of the cross-member (38) consists of a pressed sheet-metal part with a hat-shaped cross-section, and if necessary also of a forged or cast part, having a straight central area (39) and, on each side of the same, an obliquely upward-curved end section (40, 41) and, if necessary, one or more openings in the middle of its upper flange for the purpose of weight reduction.

10. Chassis according to one of the Claims 8 or 9, **characterized in that** the outer ends of the transverse beam (14) are shaped like jaws which overlap, on the outside, the spring strut holder (12, 13) that is to be connected to them.

11. Chassis according to Claim 10, **characterized in that** each jaw on the transverse beam (14) is formed by a cutout (42, 43) in the upper flange of said transverse beam and by webs (44, 45; 46, 47) at both sides of each cutout (42, 43), to which webs associated contact faces (48, 49; 50, 51) on the front and rear parts of the respective spring strut holders (12, 13) are assigned, in the area of which contact faces (48, 49; 50, 51) the transverse beam (14) is supported by its webs (44, 45; 46, 47) and firmly connected with the spring strut holders (12, 13) by means of bolts (53) passing through the corresponding bores and bolt holes provided in said contact faces.

12. Chassis according to one of the foregoing Claims 8 to 11, **characterized in that**, in addition to its proper function, one of the two spring strut holders (12, 13) incorporates an additional function, namely that of being a supporting, retaining, and coupling element for that particular end of the Panhard rod (15).

13. Chassis according to Claim 12, **characterized in that** one of the two spring strut holders (12, 13) is extended downwards by means of a bearing plate (73) at whose lower end a jaw and, at either side of said jaw, bearing eyes (74, 75) are provided, to which bearing eyes (74, 75) the Panhard rod (15) is fastened by means of a claw-type joint (77) installed in a bearing eye (76) provided at one end and by associated bolts (78).

14. Chassis according to either of Claims 12 or 13, **characterized in that** the other, opposite end of the Panhard rod (15) is coupled to a suitable point on the assembly consisting of the rigid axle body and the longitudinal arms by means of a claw-type joint (80) installed in the bearing eye (79) located at said opposite end.

15. Chassis according to Claim 14, **characterized in that** the Panhard rod (15) is connected, by means of the claw-type joint (80), to a bearing block (81), which is either an integral part of the axle body (3) or of one of the two longitudinal arms (4, 5) or is mounted thereon, and on which an appropriate contact face and threaded bores are provided for the attachment of the claw-type joint (80) by means of bolts (82).

## Revendications

1. Châssis de véhicule utilitaire lourd à un cadre dont les deux longerons (1, 2) sont reliés par plusieurs traverses et à plusieurs essieux dont l'un au moins est un essieu rigide qui, suspension comprise, se **caractérise en ce que** :
a) une jambe McPherson (6, 9) constituée d'un ressort pneumatique ou hélicoïdal (7, 10) et d'un amortisseur (8, 11) qui lui est coaxial est prévue de chaque côté de l'essieu,
b) un montant (12, 13) solidaire du cadre (1, 2) du véhicule, auquel est fixé par son extrémité supérieure une jambe McPherson (6, 9), est prévu de chaque côté de l'essieu,
c) de chaque côté de l'essieu, est disposé sur le corps d'essieu (3) un point d'articulation (32, 33) destiné à l'extrémité inférieure (28, 29) d'une jambe McPherson (6, 9) et déporté le plus possible vers la tête de raccordement d'un support de roue (34, 35) de manière à obtenir une voie de suspension maximale et - vu de l'avant - une disposition en flèche des deux jambes McPherson (6, 9), dans laquelle les extrémités supérieures (36, 37) desdites jambes sont moins écartées que leurs extrémités inférieures (28, 29).

2. Châssis suivant la revendication 1, **caractérisé en ce que** chacune des deux jambes McPherson (6, 9) - vu de côté - est soit verticale soit légèrement inclinée vers l'avant ou vers l'arrière.

3. Châssis suivant la revendication 1, **caractérisé en ce que** l'essieu rigide se présente à la manière d'un essieu à bras tirés autostabilisateur et que par conséquent la fonction de stabilisation limitant le roulis du véhicule est assignée à un ensemble constitué du corps d'essieu rigide (3) et de deux bras longitudinaux (4, 5) solidaires de ce dernier,
- les deux bras longitudinaux (4, 5), très écartés, étant bridés en bout, à l'avant ou à l'arrière, au corps d'essieu (3) au moyen de vis (25), avec liaison par adhérence ainsi que, le cas échéant, par obstacle,
- le corps d'essieu (3) présentant une capacité de torsion définie dans une zone médiane droite (18) située entre les bras longitudinaux articulés (4, 5),
- les deux bras longitudinaux (4, 5) étant relativement rigides en flexion dans la direction verticale, mais à flexibilité limitée en torsion autour de leur axe longitudinal, leur rigidité en flexion ainsi que leur capacité de torsion étant adaptées, en liaison avec la capacité de torsion du corps d'essieu rigide (3), à l'effet de stabilisation global visé par configuration et dimensionnement appropriés des sections déterminantes,
- cet essieu à bras tirés étant articulé par les extrémités libres de ses deux bras longitudinaux (4, 5) sur des supports (16, 17) solidaires du cadre,
- une barre Panhard (15) étant prévue pour le guidage transversal de cet essieu à bras tirés et étant articulée, d'une part, sur l'ensemble corps d'essieu rigide/bras longitudinaux et, d'autre part, directement sur le cadre.

4. Châssis suivant l'une des revendications précédentes, **caractérisé en ce que** chacune des deux jambes McPherson (6, 9) est articulée à son extrémité inférieure, par une cuvette de logement (28, 29) dans laquelle est montée une articulation à griffes (30, 31), sur un palier solidaire du corps d'essieu, constitué de bossages (32, 33) venus de fonderie et repris par usinage sur le corps d'essieu rigide (3), dans la zone comprise entre un bras longitudinal (4, 5) et une tête de raccordement de support de roue (34, 35) située en bout du corps d'essieu, le plus près possible de cette dernière.

5. Châssis suivant l'une des revendications précédentes, **caractérisé en ce que** chaque montant de jambe McPherson (12, 13) se présente, au moins à sa partie supérieure, à la manière d'une demi-coque ouverte vers l'extérieur (54, 55), dont l'enveloppe (56, 57) recouvre partiellement la jambe McPherson associée (6, 9) au niveau de son ressort pneumatique ou hélicoïdal (7, 10), radialement vers l'extérieur et à faible distance de l'intérieur, et sur la chapelle (58, 59) de laquelle s'appuie à son extrémité supérieure la jambe McPherson considérée (6, 9) et à laquelle elle est fixée au moyen de boulons (62, 63) passant par deux trous (60, 61), un trou central (64, 65) pratiqué dans la chapelle (58, 59) servant à centrer la jambe McPherson considérée (12, 13) et à laisser passer son extrémité supérieure (36, 37).

6. Châssis suivant la revendication 5, **caractérisé en ce que** chaque montant de jambe McPherson (12, 13) présente, à peu près au milieu de sa hauteur, une bride de raccordement (66, 67) en saillie vers l'extérieur de la demi-coque (54, 55) et pourvue de plusieurs trous de vis (68, 69), que cette bride de raccordement (66, 67) se situe approximativement au centre de poussée et que chaque montant de jambe McPherson (12, 13) est fixé au longeron considéré (1, 2) par sa bride de raccordement (66, 67), par l'intermédiaire de vis (70) traversant les trous de vis (68, 69) et des trous alignés en conséquence à l'intérieur du longeron ainsi que d'écrous associés.

7. Châssis suivant l'une des revendications précédentes, **caractérisé en ce que** les deux montants de jambe McPherson (12, 13) sont réalisés chacun sous forme de pièce moulée en acier, reprise et finie par usinage aux points nécessaires et présentant des ajours (71, 72) en des points adéquats en vue d'en réduire le poids.

8. Châssis suivant l'une des revendications précédentes, **caractérisé en ce que** les deux montants de jambe McPherson (12, 13) constituent avec une traverse (14) un berceau (38) ayant - vu de l'avant - la forme d'un U, qui recouvre en haut, avec un faible écart, le corps d'essieu (3) et une barre Panhard (15) et qui relie en outre, en les stabilisant, les deux longerons (1, 2) du cadre.

9. Châssis suivant la revendication 8, **caractérisé en ce que** la traverse (14) faisant partie du berceau (38) est constituée d'une pièce emboutie ou, le cas échéant, d'une pièce forgée ou moulée à section en forme de chapeau, présentant une partie médiane droite (39) et, de part et d'autre, une partie terminale relevée en biais (40, 41) ainsi que, le cas échéant, au milieu de sa membrure supérieure, un ou plusieurs ajours servant à en réduire le poids.

10. Châssis suivant l'une des revendications 8 et 9, **caractérisé en ce que** les extrémités extérieures de la traverse (14) se présentent à la manière d'une mâchoire enserrant de l'extérieur le montant de jambe McPherson à raccorder (12, 13).

11. Châssis suivant la revendication 10, **caractérisé en ce que** chaque mâchoire de la traverse (14) est constituée d'une découpe (42, 43) pratiquée dans sa membrure supérieure et de joues (44, 45; 46, 47) laissées de part et d'autre de chaque découpe (42, 43), auxquelles sont associées, à l'avant et à l'arrière du montant de jambe McPherson considéré (12, 13), des portées (48, 49; 50, 51) au niveau desquelles s'appuie la traverse (14) par ses joues (44, 45; 46, 47) et où elle est fixée aux montants de jambe McPherson (12, 13) par des vis (53) passant dans des trous correspondants (52).

12. Châssis suivant l'une des revendications 8 à 11, **caractérisé en ce que** l'un des deux montants de jambe McPherson (12, 13) se voit assigner, en plus de sa fonction proprement dite, celle de constituer l'organe d'appui, de retenue et d'articulation de l'une des extrémités de la barre Panhard (15).

13. Châssis suivant la revendication 12, **caractérisé en ce que** l'un des deux montants de jambe McPherson (12, 13) est prolongé vers le bas par un flasque (73), à l'extrémité inférieure duquel sont ménagés une mâchoire et, de part et d'autre de cette dernière, une cuvette de logement (74, 75), auxquelles est fixée la barre Panhard (15) par une articulation à griffes (77) avec vis associées (78) montée dans une cuvette de logement (76) prévue à son extrémité.

14. Châssis suivant l'une des revendications 12 et 13, **caractérisé en ce que** la barre Panhard (15) est raccordée à son autre extrémité opposée, par l'intermédiaire d'une articulation à griffes (80) montée dans la cuvette de logement (79) prévue à ce niveau, en un point approprié de l'ensemble corps d'essieu rigide/bras longitudinaux.

15. Châssis suivant la revendication 14, **caractérisé en ce que** la barre Panhard (15) est raccordée par l'intermédiaire de l'articulation à griffes (80) à un support (81) qui est soit venu de fonderie soit rapporté soit sur le corps d'essieu (3) soit sur l'un des deux bras longitudinaux (4, 5) et sur lequel sont prévus une portée et des trous taraudés adéquats pour le vissage de l'articulation à griffes (80) au moyen de vis (82).
